**Europäisches Patentamt**

**European Patent Office**

**Office européen des brevets**

(19)

(11) Veröffentlichungsnummer : **0 328 536 B1**

(12) # EUROPÄISCHE PATENTSCHRIFT

(45) Veröffentlichungstag der Patentschrift :
**03.06.92 Patentblatt 92/23**

(51) Int. Cl.⁵ : **H02P 3/06**

(21) Anmeldenummer : **87906804.7**

(22) Anmeldetag : **21.10.87**

(86) Internationale Anmeldenummer :
**PCT/DE87/00473**

(87) Internationale Veröffentlichungsnummer :
**WO 88/03337 05.05.88 Gazette 88/10**

(54) **SCHALTUNGSANORDNUNG ZUM BREMSEN EINES KOLLEKTORMOTORS.**

(30) Priorität : **28.10.86 DE 3636555**

(43) Veröffentlichungstag der Anmeldung :
**23.08.89 Patentblatt 89/34**

(45) Bekanntmachung des Hinweises auf die
Patenterteilung :
**03.06.92 Patentblatt 92/23**

(84) Benannte Vertragsstaaten :
**CH DE FR GB IT LI NL**

(56) Entgegenhaltungen :
**DE-A- 2 002 768**
**DE-A- 2 624 236**
**DE-A- 3 324 483**
**DE-A- 3 539 841**

(56) Entgegenhaltungen :
**US-A- 4 144 482**
**BROWN BOVERI REVIEW, Bd. 69, Heft 1/2,**
**Januar/Februar 1982/Baden/Schweiz J. WER-**
**DER "New B'B'Motorcaches (Class Be 4/4**
**andDriving Trailers for Neuchâtel and its Envi-**
**rons (Switzerland)", Seiten 27-31**

(73) Patentinhaber : **SCHRÖCKER, Rainer**
**Obere Burghalde 47**
**W-7250 Leonberg1 (DE)**

(72) Erfinder : **SCHRÖCKER, Rainer**
**Obere Burghalde 47**
**W-7250 Leonberg1 (DE)**

(74) Vertreter : **Rüger, Rudolf, Dr.-Ing. et al**
**Webergasse 3 Postfach 348**
**W-7300 Esslingen/Neckar (DE)**

## Beschreibung

Die Erfindung betrifft eine Schaltungsanordnung zum Bremsen eines Kollektormotors mit den Merkmalen des Oberbegriffs des Anspruchs 1.

Bei einer gattungsgemäßen Schaltungsanordnung liegt im Bremsbetrieb zu der Parallelschaltungaus dem Anker und der Feldwicklung noch ein PTC-Widerstand parallel. Dieser PTC-Widerstand weist eine mit der Temperatur ansteigende Impedanz auf und hat die Aufgabe, die Felderregung nach Einsetzen der Selbsterregung im Bremsbetrieb zu vermindern. Ohne diesen Widerstand würde bei der belkannten Schaltungsanordnung ein sogenanntes "Kollektorrundfeuer" auftreten, das zu einer sehr starken Lebensdauerverkürzung des Kollektors führt.

Nachteilig bei dieser Schaltung der DE-PS 3 035 185 ist die Temperaturabhängigkeit des Bremsvorganges insofern, als vollkommen unterschiedliche Bremszeiten zustandekommen je nachdem, wie hoch die Anfangstemperatur des PTC-Widerstandes bei Bremsbeginn gewesen ist. Erfolgen zwei Bremsungen kurz hintereinander, ohne daß der PTC-Widerstand genügend ausgekühlt ist, so tritt bei der zweiten Bremsung eine stark erhöhte Bremswirkung auf.

Andererseits kann es bei sehr tiefen Temperaturen geschehen, daß die Bremswirkung nur sehr verzögert einsetzt, weil die Selbsterregung durch die Belastung des kalten und damit niederohmigen PTC-Widerstandes beeinträchtigt wird.

Schließlich muß bei der bekannten Schaltungsanordnung die Wärmekapazität und die Kennlinie des PTC-Widerstandes recht genau auf die in dem Anker gespeicherte kinetische Energie abgestimmt werden, damit weder ein Kollektorrundfeuer entsteht noch ein ungenügendes Bremsverhalten beiniedrigen Drehzahlen. Selbst wenn jedoch diese Abstimmung exakt erfolgt ist, treten in dem Augenblick Fehlabstimmungen auf, wenn der Motor mit unterschiedlichen Schwungmassen gekuppelt wird.

Die bekannte Schaltung ist deswegen nicht universell einsetzbar und erfordert eine genaue Anpassung an den entsprechenden Einsatzfall.

Ob bei der bekannten Schaltungsanordnung die Bremswirkung tatsächlich zustandekommt, hängt von den Magnetisierungsverhältnissen ab, die in dem Augenblick vorliegen, wenn der Motor aus dem Motorbetrieb in den Bremsbetrieb umgeschaltet wird. Wenn der Restmagnetismus in diesem Augenblick zu klein ist, tritt bei der Umschaltung in den Bremsbetrieb keine Selbsterregung auf und die Bremsung setzt aus. Die bekannte Schaltung ist in dieser Hinsicht äußerst unzuverlässig.

Eine Schaltungsanordnung, die ohne temperaturabhängig arbeitende Bauelemente auskommt, ist in der deutschen Patentanmeldung DE-A-35 39 841.8 beschrieben, die nach dem Prioritätstag veröffentlicht wurde. Diese Schaltungsanordnung verwendet einen Transistor, der im Bremsbetrieb in Serie mit der Feldwicklung geschaltet ist und über eine Steuerschaltung mehr oder weniger aufgesteuert wird. Diese Schaltung zeigt ein konstantes Bremsverhalten, unabhängig davon, in welchem zeitlichen Abstand die Bremsungen erfolgen und wie sich die Schwungverhältnisse an dem Motor ändern. Diese Schaltungsanordnung ist deswegen weitgehend universell anwendbar, wenn darauf geachtet wird, daß die zulässige Verlustleistung des in dem Ankerstromkreis liegenden Transistors gröber ist als die tatsächlich auftretende Verlustleistung.

Da bei dieser Schaltungsanordnung die größte Impedanz in dem aus Anker, Feldwicklung und Transistor gebildeten Stromkreis der Transistor selbst darstellt, muß von ihm auch die kinetische Energie des zu bremsenden Ankers in Wärme umgesetzt werden. Der Transistor erfordert deswegen eine entsprechende kräftige Kühlung und er muß für hohe Leistungswerte ausgelegt werden.

Aus der DE-A-26 24 236 ist eine Schaltungsanordnung zum Bremsen eines Universalmotors bekannt, bei der im Bremsbetrieb ein Teil der Feldwicklung über eine Diode zu dem Anker parallelgeschaltet wird. Parallel zu der Diode liegt ein Kondensator, der während des vorausgehenden Motorbetriebs auf den Scheitelwert der Netzspannung aufgeladen wurde und der nach der Umschaltung in den Bremsbetrieb die Selbsterregung einleiten soll. Der Entladestrom des Kondensators fließt nicht nur durch die Feldwicklung, sondern auch durch den Anker. Der Motor wird deswegen zu Beginn der Bremsung im Hauptschlußbetrieb gefahren, bei dem Anker, Feldwicklung und die zusätzliche Spannungsguelle in Serie liegen, während nach der Entladung des Kondensators ein Nebenschlußbetrieb vorliegt, denn dann sind Anker und Feldwicklung über die Diode zueinander parallelgeschaltet.

Ausgehend hiervon ist es Aufgabe der Erfindung, eine Schaltungsanordnung zum Bremsen eines Kollektormotors zu schaffen, deren Bremsverhalten von der zeitlichen Aufeinanderfolge der Bremszyklen unabhängig ist, ohne daß bei der Bremsung am Kollektor Spannungen entstehen, die zu Überschlägen und damit einer Lebensdauerverminderung führen können, während andererseits die Bremsung immer zuverlässig eingeleitet wird.

Erfindungsgemäß wird diese Aufgabe durch die Schaltungsanordnung mit den Merkmalen des Anspruches 1 gelöst.

2

Durch die Verwendung der elektrischen Speichermittel, die im Motorbetrieb nachgeladen werden, steht nach der Umschaltung in den Bremsbetrieb, wenn der Motor vom Netz getrennt ist, Energie zur Verfügung, um zwangsweise die Selbsterregung einzuleiten, und zwar unabhängig davon, wie die Magnetisierungsverhältnisse am Ende des Motorbetriebes ausgesehen haben. Dies ist insbesondere dann wichtig, wenn der Kollektor infolge einer bereits langen Betriebszeit große Übergangswiderstände aufweist, was eine Selbsterregung nur bei großem Restmagnetismus zulassen würde.

Die Temperaturunabhängigkeit der die Felderregung beeinflussenden Mittel sorgt für ein Bremsverhalten, das von der zeitlichen Aufeinanderfolge und den angekoppelten Schwungmassen des Motors unabhängig ist, so daß die Schaltung für eine große Variationsbandbreite von Motoren ohne spezielle Anpassung verwendet werden kann.

Schließlich reduzieren die die Felderregung beeinflussenden Mittel die im Bremsbetrieb auftreten Induktionsspannungen auf ungefährliche Werte, dir nur wenige Funkenüberschläge an den Kollektorsegmenten hervorrufen können. Außerdem wird hierdurch auch das beim Bremsen maximal auftretende Moment vermindert, was insbesondere bei handgeführten, kraftangetriebenen Werkzeugen wichtig ist. Würde keine Begrenzung des Bremsmomentes vorhanden sein, könnte das Werkzeug dem Benutzer beim Umschalten in den Bremsbetrieb aus der Hand gerissen werden, zumindest dann, wenn er auf das starke Bremsmoment beim Ausschalten des Werkzeugs nicht gefaßt ist.

Bei kleinen Motoren kann es ausreichen, wenn die Felderregung einfach dadurch vermindert wird, daß lediglich ein Teil der Feldwicklung, die für den Motorbetrieb benötigt wird, im Bremsbetrieb zum Anker parallelgeschaltet ist. Allerdings wird auch hier die Speicherschaltung zum Einleiten der Bremsung benötigt, um die Selbsterregung zu erzwingen.

Die Schaltung hat den weiteren Vorteil, daß in den Mitteln zur Verminderung der Felderregung nur eine vergleichsweise kleine Leistung in Wärme umgesetzt wird, während der größte Teil der Bremsleistung in der Ankerwicklung selbst in Wärme umgesetzt wird. Für einfache Anwendungen genügt es deswegen, wenn im Bremsbetrieb die Mittel zur Beeinflussung der Felderregung von einem Zweipol mit Z-Dioden-Charakteristik gebildet sind, wodurch die Spannung an der Feldwicklung auf die jeweils gewünschten Werte vermindert wird. Da sich hierbei der Ankerstrom auf einen Strom durch die Z-Diode und einen Strom durch die Feldwicklung aufteilt, erfolgt die Umsetzung der Bremsenergie weitgehend in der Wicklung des Ankers und der Wicklung des Feldes selbst, während an der Z-Diode weniger Verlustleistung auftritt. Bei praktischen Ausführungen mit Universalkleinmotoren mit einer Betriebsspannung von 220 V und einer Anschlußleistung von ca. 600 W liegt die Spannung für die Z-Diode bei ca. 5,1 V.

Treten größere Leistungen auf, die unzweckmäßig große Z-Dioden oder unzweckmäßig große Kühleinrichtungen für die Z-Dioden erfordern würden, so können die Mittel zur Beeinflussung der Felderregung auch geschaltet arbeiten, in der Weise, daß sie für eine vorbestimmte Zeit den Anker kurzschließen und während einer sich daran anschließenden vorbestimmten Zeit eine gegen unendlich gehende Impedanz aufweisen. Die Verlustleistung, die dann in diesen Mitteln umgesetzt wird, ist vergleichsweise verschwindend klein, weil entweder die anliegende Spannung oder der durch sie hindurchfließende Strom nahezu null sind.

Für diese getaktete Betriebsweise kommen zwei Möglichkeiten in Betracht, und zwar entweder arbeiten die die Felderregung beeinflussenden Mittel nach Art eines Zweipunktreglers, so daß sie bis zum Ansteigen der Felderregung auf einen ersten Grenzwert parallel zu dem Anker eine große Impedanz, und bis zum Abfallen der Felderregung auf einen unter dem ersten Grenzwert liegenden Grenzwert parallel zu dem Anker eine kleine Impedanz darstellen, wobei sich diese Betriebszustände mit verhältnismäßig hoher Frequenz periodisch abwechseln. Die andere Möglichkeit besteht darin, die unterschiedlichen Impedanzwrerte nach Art einer Pulsweitenmodulation einzuschalten, wobei entweder die Dauer für die niedrige Impedanz oder die Dauer für die hohe Impedanz festgehalten wird und die Dauer für die jeweils andere Impedanz entsprechend der Bremscharakteristik verlängert oder verkürzt wird.

Die erste Ausführungsform ist von ihrem Aufbau her verhältnismäßig einfach und erfordet deswegen wenig Bauelmente, während die zweite Ausführungsform Anwendung findet, wenn ein spezieller Verlauf des Motordrehoments oder der -drehzahl im Bremsbetrieb eingehalten werden soll. So eignet sich die zweite Ausführtungsform auch zum Einhalten einer konstanten Bremszeit, wenn das angekuppelte Schwungoment starken Schwankungen unterworfen ist. Bei der ersten Ausführungsform würden dann unterschiedliche Bremszeiten zustandekommen, wenn die Grenzwerte nicht entsprechend nachgeregelt oder -gestellt werden.

Um die unterschiedlichen Impedanzen zu erzeugen, eignet sich ein elektronischer Schalter, beispielsweise ein bipolarer oder Feldeffekttransistor, der periodisch zwischen dem leitenden und dem Sperrzustand hin- und hergeschaltet wird, und zwar um die Verlustleistung klein zu halten, im leitenden Zustand vorzugsweise bis in die Sättigung.

Die Grenzwerte für die erste Ausführungsform der getakteten Schaltung können entweder von der an dem im Bremsbetrieb wirksamen Teil der Feldwicklung anliegenden Spannung oder dem Feldstrom abgeleitet werden. Die Spannung an der Feldwicklung kann dann herangezogen werden, wenn zu dem im Bremsbetrieb wirksamen Teil der Feldwicklung ein Speicherkondensator parallelgeschaltet ist, der bei kurzgeschlossenem Anker das Abklingen der Felderregung verlangsamt. Dabei hat diese Schaltung noch den Vorteil, daß gleichzeitig eine Siebung auftritt; so daß die Steuerschaltung praktisch lediglich einen Schmitt-Trigger zu enthalten braucht.

Es ist auch möglich, die Grenzwerte bis kurz vor Erreichen des Stillstandes ansteigen zu lassen, um eine Progressive Bremsung zu erreichen.

Falls der Speicherkondensator wegen seiner begrenzten Lebensdauer oder aus anderen Gründen unerwünscht ist, kann stattdessen zu dem im Bremsbetrieb wirksamen Teil der Feldwicklung auch eine Freilaufdiode parallelgeschaltet sein, wobei dann der Grenzwert aus dem Strom durch die Feldwicklung abgeleitet wird.

In der Zeichnung sind Ausführungsbeispiele des Gegenstandes der Erfindung dargestellt. Es zeigen:

Fig. 1 eine Schaltungsanordnung zum netzunabhängigen elektrischen Bremsen eines Kollektormotors mit einer Z-Diode zum Begrenzen der Felderregung,

Fig. 2 einen Zweipol zum Ersatz der Z-Diode nach Fig. 1,

Fig. 3 das Schaltbild einer Schaltungsanordnung zum netzunabhängigen Bremsen eines Kollektormotors, wobei die Ankerspannung in Abhängigkeit von der Felderregung periodisch kurzgeschlossen wird, die über die an der Feldwicklung anliegenden Spannung ermittelt wird,

Fig. 4 ein Blockschaltbild einer Schaltungsanordnung, die ähnlich wie die Schaltungsanordnung nach Fig. 3 arbeitet, wobei jedoch die Felderregung über den Feldstrom gemessen wird,

Fig. 5 das Schaltbild für die in Fig. 4 gezeigten Funktionsblöcke;

Fig. 6 eine Schaltungsanordnung zum netzunabhängigen elektrischen Bremsen eines Kollektormotors mit einer getakteten Steuerung der Felderregung in Abhängigkeit von der Motordrehzahl und

Fig. 7 das Schaltbild der Funktionsblöcke nach Fig. 6 .

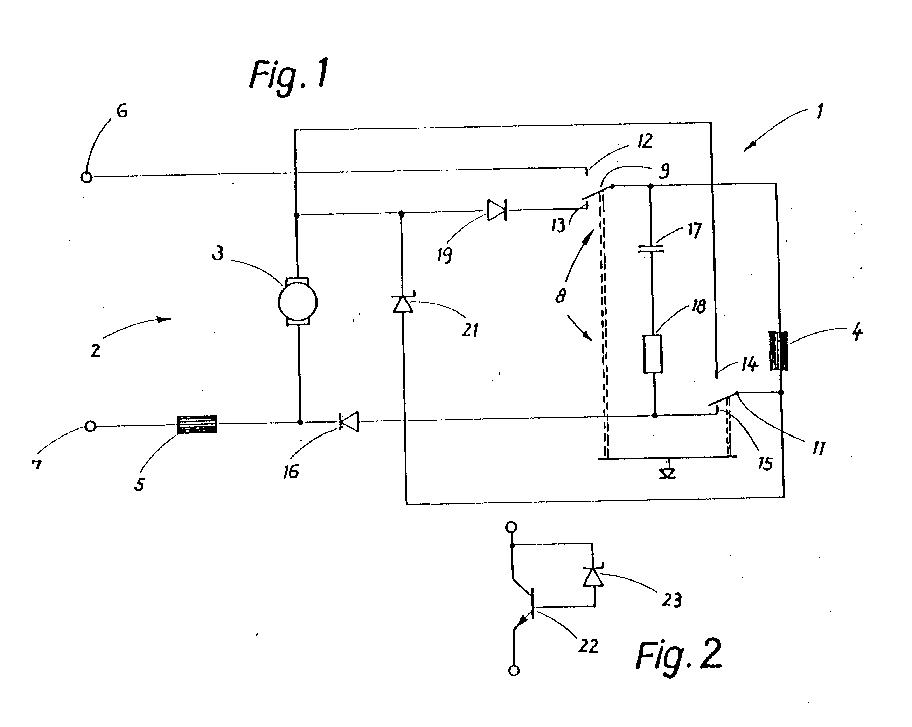

Fig. 1 zeigt eine Schaltungsanordnung 1 zum netzunabhängigen elektrischen Bremsen eines Kollektormotors 2, der einen Anker 3 sowie eine aus Teilwicklungen 4 und 5 bestehende Feldwicklung aufweist. Der Motor 2 ist über Netzanschlußklemmen 6 und 7 mit einer Stromversorgung, einem 220 V Wechselspannungsnetz verbindbar.

Die Umschaltung zwischen den Betriebsarten Motorbetrieb und Bremsbetrieb erfolgt mittels eines zweipoligen Umschalters 8, der zwei bewegliche Kontakte 9 und 11 sowie damit zusammenwirkende feststehende Kontakte 12, 13, 14 und 15 aufweist.

Bei der gezeigten Schaltungsanordnung 1 ist die Teilwicklung 5 einenends mit der Netzanschlußklemme 7 verbunden und ihr anderes Ende führt unmittelbar zu einem Anschluß des Ankers 3 bzw. der entsprechenden Kollektorbüste. Von dieser Verbindungsstelle zwischen dem Anker 3 und der Teilwicklung 5 führt eine Diode 16 zu dem feststehenden Kontakt 15, und zwar ist sie dort mit ihrer Anode angeschlossen. Der bewegliche Kontakt 11 sowie der bewegliche kontakt 9 sind jeweils mit einem Ende der zugehörigen Teilwicklung 4 verbunden und außerdem führt zu dem beweglichen Kontakt 9 die Serienschaltung aus einem Kondensator 17 und einem ohmschen Widerstand 18. Die Serienschaltung aus dem Kondensator 17 und dem Widerstand 18 liegt anderenends an dem feststehenden Kontakt 15 bzw. der Anode der Diode 16. Eine weitere Diode 19 ist zwischen dem feststehenden Kontakt 13 und demjenigen Ende des Ankers 3 geschaltet, das mit dem feststehenden Kontakt 14 verbunden ist..Die Diode 19 ist derart gepolt, daß ihre Kathode mit dem feststehenden kontakt 13 verbunden ist.

Der feststehende Kontakt 12 schließlich führt zu der Netzanschlußklemme 6.

Um im Bremsbetrieb die Felderregung auf Werte zu begrenzen, die drehzahlunabhängig sind und unter denjenigen Werten liegen, bei denen unerwünscht starkes Kollektorfeuer auftritt, ist eine Z-Diode 21 vorgesehen, die von dem mit dem feststehenden Kontakt 14 verbundenen Anschluß des Ankers 3 zu dem mit dem beweglichen Kontakt 11 verbundenen Ende des Wicklungsteils 4 führt.

Wenn der als Taster ausgebildete zweipolige Umschalter 8 aus der gezeigten Ruhelage in die Arbeitsstellung umgeschaltet wird, werden die elektrischen Verbindungen zwischen den Kontakten 9 und 13 sowie 11 und 15 getrennt und stattdessem elektrische Verbindungen zwischne den Kontakten 9 und 12 sowie 11 und 14 hergestellt. Es kann in dieser Schalterstellung von der Netzanschlußklemme 6 ein Strom in das Wicklungsteil 4, von dort über die geschlossenen Kontakte 11 und 14 zu dem Anker 3 fließen. Der Strom fließt aus dem Anker 3 weiter zu dem Wicklungsteil 5 und von dort zurück in das Netz über die Netzanschlußklemme 7. Dieser Strompiad besteht bei Wechselspannungsspeisung für beide Halbwellen.

Zusätzlich zu diesem durch den Anker 3 fließenden Strom fließt bei einer Halbwelle ein Strom von der Netzanschlußklemme 6, die geschlossenen Kontakte 9 und 12, den Kondensator 17, den Vorwiderstand 18 sowie die Diode 16 zu dem Wicklungsteil 5 und von dort zurück ins Netz. Hierdurch wird der Kondensator 17 über den Vorschaltwiderstand 18 auf eine Spannung aufgeladen, die gleich der Versorgungsspannung an den beiden Netzanschlußklemmen 6 und 7 ab züglich des Spannungsabfalls an dem Wicklungsteil 5 ist.

Infolge der Aufteilung der Feldwicklung auf die beiden Wicklungsteile 4 und 5 liegt symmetrisch in jeder Stromzuleitung zu dem Anker 3 ein Wicklungsteil, um in bekannter Weise die Störstrahlung zu verringern. Die weiteren Maßnahmen zur Entstörung sind der Übersichtlichkeit halber nicht dargestellt.

Durch Loslassen des zweipoligen Umschalters 8 wird der beschriebene Motorbetrieb beendet und stattdessen der Bremsbetrieb eingeschaltet, wozu die beweglichen Schalterkontakte 9 und 11 in ihre in Fig. 1 gezeigte Ruhelage zurückkehren, so daß die Stromverbindung des Motors 2 zu der Stromversorgung über die nunmehr getrennten Kontakte 9 und 12 einpolig abgeschaltet wird. Gleichzeitig wird der Wicklungsteil 4 über die entsprechenden geschlossenen Ruhekontakte 9 und 13 sowie 11 und 15 sowie die in dieser Betriebsweise in Durchlaßrichtung gepolten Dioden 16 und 19 zu dem Anker 3 parallelgeschaltet, und zwar mit einer Polarität, die der Polarität aus dem vorhergehenden Motorbetrieb entgegengesetzt ist. Während im Motorbetrieb der in Fig. 1 gezeigte untere Anschluß des Wicklungsteils 4 mit dem oberen Anschluß des Ankers 3 verbunden war, ist nunmehr im Bremsbetrieb der untere Anschluß des Wicklungsteils 4 mit dem unteren Anschluß des Ankers 3 verbunden.

Gleichzeitig mit der Umschaltung in den Bremsbetrieb wird die Serienschaltung aus dem Kondensator 17 und dem Vorwiderstand 18 zu dem Wicklungsteil 4 parallelgeschaltet und der während des Motorbetriebs fast auf Netzspannung aufgeladene Kondensator 17 besinnt sich über den Wicklungsteil 4 und den Widerstand 18 zu entladen. Eine Entladung über den Anker 3 wird von der Diode 19 verhindert, die bei aufgeladenem Kondensator 17 in Sperrichtung vorgespannt wird, da wegen der Polung der Diode 16 eine Aufladung erfolgte, bei der die mit dem Kontakt 9 verbundene Elektrode gegenüber der anderen auf eine positive Spannung aufgeladen wurde.

Die Entladung des Kondensators 17 durch den Wicklungsteil 4 bewirkt eine Felderregung, deren Polarität von der Rest-magnetisierung beim Umschalten in den Bremsbetrieb unabhängig ist und die dazu führt, daß der sich praktisch noch mit Nenndrehzahl drehende Anker 3 eine Klemmenspannung mit plus an der Diode 19 und minus an der Diode 16 abgibt. Die von dem umlaufenden Anker 3 erzeugte Klemmenspannung wird von der Z-Diode 21, die über die Diode 16 und die geschlossenen Kontakte 11 und 15 zu dem Anker 3 parallelliegt, auf die Durchlaßspannung der Z-Diode 21 zuzüglich der Durchlaßspannung der Diode 16 begrenzt. Damit wird nach Entladung des Kondensators 17 die Erregerspannung für die Teilwicklung 4 auf einen Wert festgeklemmt, der gleich der Durchlaßspannung der Z-Diode 21 abzüglich der Durchlaßspannung der Diode 19 ist.

Die Begrenzung der Erregerspannung an dem Wicklungsteil 4 führt zu einer Verminderung des Bremsmomentes, das auftreten würde, wenn die volle Spannung des Ankers 3 auf den Wicklungsteil 4 gegeben würde. Außerdem werden durch die Z-Diode die Induktionsspannung am Kollektor des Ankers auf Werte reduziert, die unterhalb der Werte liegen, bei denen Überschläge zwischen den Kollektorsegmenten zu befürchten sind.

Da die Nennspannung der Z-Diode 21. bei einem Universalmotor für 220 V bei ca. 5,1 V liegt, bleibt die Erregerspannung an dem Wicklungsteil 4 über einen verhältnismäßig großen Drehzahlbereich konstant.

Erst, wenn die Drehzahl des Ankers 3 so weit gesunken ist, daß die induzierte Ankerspannung unterhalb der Nennspannung der Z-Diode 21 liegt, wird diese für den weiteren Bremsbetrieb unwirksam. Dies geschieht jedoch erst bei verhältnismäßig niedrigen Ankerdrehzahlen.

Durch Veränderung der Nennspannung der Z-Diode 21 kann in weiten Grenzen das Bremsmoment, mit dem der Anker 3 abgebremst wird, eingestellt werden. Dabei bedeuten kleine Nennspannungen eine lange Bremszeit und große Nennspannungen eine kurze Bremszeit.

Da die Richtung der Felderregung durch den Speicherkondensator 17 zu Beginn der Bremsung immer mit gleicher Polarität aufgezwungen wird, hat auch die von dem Anker 3 abgegebene Spannung die richtige Polarität, die die Z-Diode 21 in der beschriebenen Weise wirksam werden läßt. Auch wenn beim Umschalten in den Bremsbetrieb nur eine sehr kleine Restmagnetisierung vorhanden ist, die für eine Selbsterregung nicht ausreichen würde, erbringt die Entladung des Kondensators 7 über den Wicklungsteil 4 die für die Selbsterregung notwendige Vormagnetisierung in dem Ständer des Motors 2.

Je nach den Charakteristiken des Motors 2 kann entweder nur einer der Wicklungsteile 4 oder 5 herangezogen werden oder es werden beide in Serienschaltung verwendet.

Die Arbeitsweise beim Bremsen ist sinngemäß die gleiche, lediglich der Umschalter 8 muß entsprechend erweitert werden.

Falls keine Z-Diode mit genügend großer Verlustleistung zur Verfügung steht, kann anstelle der Z-Diode 21 auch die in Fig. 2 gezeigte Kombination aus einem bipolaren Transistor 22 und einer Z-Diode 23 verwendet werden, wobei die Kollektor-Emitterstrecke des Transistors 22 die Z-Diode 21 ersetzt. Die Z-Diode 23 ist dann zwischen den Kollektor und die Basis des bipolaren Transistors 22 geschaltet, und zwar liegt sie im Falle eines NPN-Transistors mit ihrer Anode an der Basis.

Sobald die zwiscshen Kollektor und Emitter anstehende Spannung die Durchlaßspannung der Z-Diode 23 zuzüglich der Durchlaßspannung an der Basisemittersperrschicht übersteigt, beginnt ein Basisstrom zu fließen, der den Transistor 22 aufsteuert, was einer weiteren Erhöhung der Kollektor-Emitterspannung entgegenzuwirken bestrebt ist.

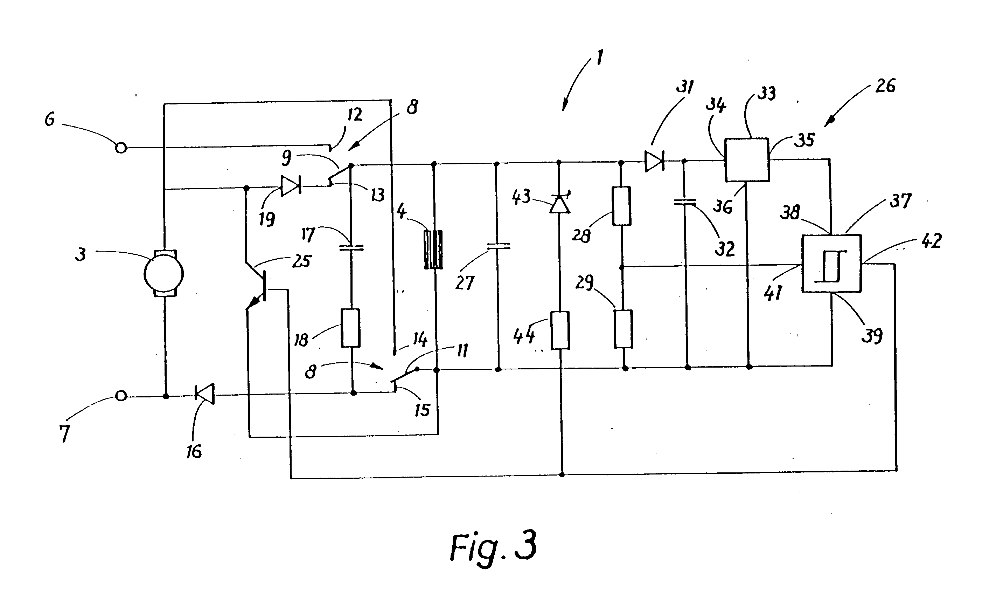

Die Schaltungsanordnung nach Fig. 1 ist verhältnismäßig einfach und kommt mit wenigen Bauteilen aus. Dafür tritt an der Z-Diode 21 bzw. der entsprechenden Ersatzschaltung aus dem Transistor 22 und der Z-Diode 23 während der gesamten Bremszeit eine verhältnismäßig hohe Verlustleistung auf. Diese Verlustleistung läßt sich vermindern, wenn die Mittel, mit denen die Begrenzung der Erregerspannung für die Feldwicklung bewerkstelligt werden, nicht, wie im Falle von Fig. 1, kontinuierlich, sondern diskontinuierlich arbeiten. Ein entsprechendes Ausführungsbeispiel zeigt Fig. 3, wobei für Bauteile und Schaltungspunkte, die bereits in Verbindung mit Fig. 1 beschrieben sind, dieselben Bezugszeichen verwendet werden.

Zur weiteren Vereinfachung wurde im übrigen angenommen, daß der Motor 2 lediglich eine ungeteilte Feldwicklung 4 enthält.

Der wesentliche Unterschied besteht darin, daß anstelle der Z-Diode 21 ein Transistor 25 sowie eine Steuerschaltung 26 zum Ansteuern des Transistors 25 verwendet wird. Der Transistor 25 liegt mit seinem Kollektor an der Anode der Diode 19 und mit seinem Emitter an dem Umschaltkontakt 11.

Die Steuerschaltung 26 enthält einen zu der Feldwicklung bzw. dem Wicklungsteil 4 parallelgeschalteten Kondensator 27, der bei durchgesteuertem Transistor 25 einen Strom in dem Wicklungsteil 4 aufrecht erhält. Ferner ist dem Wicklungsteil 4 ein Spannungsteiler aus zwei Widerständen 28 und 29 parallelgeschaltet sowie die Serienschaltung aus einer Diode 31 und einem Glättungskonäensator 32. Die letzten beiden liefern über einen Festspannungsregler 33, der einen Spannungseingang 34, einen Spannungsausgang 35 sowie einen Masseanschluß 36 aufweist, eine Versorgungsspannung für einen nachgeschalteten Schmitt-Trigger 37 mit zwei Stromversorgungsanschlüssen 38 und 39, einem Signaleingang 41 sowie einem Signalausgang 42.

Der Festspannungsregler 33 ist eine handelsübliche integrierte Schaltung, beispielsweise ein Typ 78LO2 und auch der Schmitt-Trigger 37 wird von einer integrierten Schaltung, beispielsweise dem Typ TCA345 der Firma Siemens gebildet.

Der Festspannungsregler 33 ist mit seinem Stromversorgungseingang 34 an die Verbindungsstelle zwischen der Diode 31 und dem Siebkondensator 32 angeschlossen, während der Masseanschluß 36 mit dem anderen Ende des Kondensators 32 verbunden ist. Die aus dem Ausgang 35 kommende geregelte Gleichspannung wird dem Stromversorgungseingang 38 zugeführt, während der Stromversorgungseingang 39 mit der Schaltungsmasse bzw. dem Masseanschluß 36 des Festspannungsreglers 33 verbunden ist.

Sein Steuersignal erhält der Schmitt-Trigger 37 über den Spannungsteiler 28 , 29, und zwar ist der Signaleinsang 41 an die Verbindungsstelle der beiden Widerstände 28 und 29 angeschlossen.

Der Signalausgang 42 führt zu der Basis des bipolaren NPN-Transistors 25, an die außerdem die Serienschaltung aus einer Z-Diode 43 und einem Vorwiderstand 44 angeschaltet ist. Das heiße Ende der Serienschaltung aus der Z-Diode 43 und dem Vorwiderstand 44 ist mit der Anode der Diode 31 bzw. dem Umschaltkontakt 9 verbunden. Die Serienschaltung aus der Z-Diode 43 und dem Widerstand 44 liefert den Basisstrom für den Transistor 25, wenn der Signalausgang 42 ein Open-Kollektorausgang ist.

Die insoweit beschriebene Schaltung arbeitet im Motorbetrieb in der gleichen Weise, wie dies im Zusammenhang mit Fig. 1 erläutert ist. Wird im Anschluß an den Motorbetrieb durch Freigeben des zweipoligen Umschalters 8 in den Bremsbetrieb umgeschaltet, erfolgt, wie vorher, eine Endladung des auf nahezu Netzspannung aufgeladenen Kondensators 17 über die Feldwicklung 4 und gleichzeitig werden die Kondensatoren 27 und 32 entsprechend den Kapazitätsverhältnissen mit aufgeladen. Hierdurch entsteht zum einen der für die Felderregung notwendige Strom durch die Feldwicklung 4, der die Magnetisierungsrichtung festlegt und zur Selbsterregung führt, sowie die Versorgungsspannung für den Schmitt-Trigger 37, der als Schwellwertschalter arbeitet. Der Motor 2 beginnt deswegen umgehend nach der Umschaltung in den Bremsbetrieb an seinem Anker eine zunächst lawinenartig anwachsende Spannung abzugeben, die den Kondensator 27 und den Kondensator 32 über die Diode 31 weiter auflädt. Sobald der Kondensator 32 genügend weit aufgeladen ist, gibt der Festspannungsregler 33 an seinem Spannungsausgang 35 die entsprechende konstante Versorgungsspannung für den Schmitt-Trigger 37 ab. Mit dem Auftreten der Versorgungsspannung an dem Spannungausgang 35 ist der Schmitt-Trigger 37 arbeitsbereit und schaltet seinen Signalausgang 42, bezogen auf die Schaltungsmasse, gebildet von dem Umschaltkontakt 11 hoch- oder niederohmig, je nachdem, ob die Spannung an seinem Signaleingang 41 über oder unter den Schaltschwellen liegt.

Die an der Feldwicklung 4 anstehende Spannung wird außerdem nach Teilung über den Spannungsteiler aus den Widerständen 28 und 29 dem Signaleingang 41 zugeführt. Wenn diese Spannung nunmehr nach Einleiten des Bremsbetriebes über der oberen Schaltschwelle des Schmitt-Triggers 37 liegt, beispielsweise bei 1,7 V gemessen gegenüber dem Masse anschluß 39, schaltet der Schmitt-Trigger 37 seinen Signalausgang 42 in den hochohmigen Zustand um. Die Basis des Transistors 25 wird daraufhin über die Serienschaltung aus dem Widerstand 44 und der Z-Diode 43 mit der an der Feldwicklung 4 auftretenden Spannung beaufschlagt, die höher ist als die Nennspannung der Z-Diode 43.

Der Transistor 25 wird deswegen in den leitenden Zustand umgeschaltet, wodurch der Anker 3 über die Kollektor-Emitter-Strecke des Transistors 25 kurzgeschlossen wird. Es kann nun der Kondensator 27 nicht mehr nachgeladen werden und er beginnt sich, mehr oder weniger schnell einerseits über die Feldwicklung 4 und andererseits über die Basis-Emitterstrecke des Transistors 25 den damit in Serie geschalteten Widerstand 44 und die ebenfalls damit in Serie liegende Z-Diode 43 zu entladen. Eine gleichzeitige Entladung des Kondensators 32 über die Feldwicklung 4 und die Basis des Transistors 25 wird durch die Diode 31 verhindert, die sperrt, sobald die Spannung an dem Kondensator 27 unter die Spannung an dem Kondensator 32 sinkt. Die in dem Kondensator 32 enthaltene elektrische Ladung dient deswegen ausschließlich der Stromversorgung des SchmittTriggers 37, die über den Festspannungsregler 33 in bekannter Weise stabilisiert ist. Eine Entlafung des Koncensators 27 über den durchgeschalteten Transistor 25 wird von der Diode 19 verhindert.

Wenn die Spnannung an dem Kondensator 27 so weit gesunken ist, daß der Spannungsabfall an dem Widerstand 29 die untere Schwellspannung des Schmitt-Triggers 37 unterschreitet, beispielsweise 1, 2 V, schaltet der Schmitt-Trigger 37 in seinen anderen Schaltzustand um, in dem sein Signalausgang 42 eine geringe Impedanz gegenüber der Schaltungsmasse aufweist. Der durch die Z-Diode 43 und den Widerstand 44 fließende Basisstrom wird nun von dem Signalausgang 42 zur Schaltungsmasse hin kurzgeschlossen, womit der Transistor 25 sperrt und die von dem sich drehenden Anker 3 induzierte Spannung wiederum die Kondensatoren 27 und 32 nachzuladen vermag.

Dieser Betriebszustand hält so lange an, bis an dem Schmitt-Trigger 37 die obere Schaltschwelle überschritten wird und damit der Signalausgang 42 hochohmig geschaltet wird.

Das so hervorgerufene periodische Ein- und Ausschalten des Transistors 25 legt die Spannung an der Feldwicklung 4 auf einen Bereich entsprechend den beiden Grenzwerten sowie dem Spannungsteilerverhältnis der beiden Widerstände 28 und 29 fest. Dementsprechend niedrig ist auch die Anker-EMK sowie das Moment, mit dem der Anker des Motors 2 gebremst wird. Erst kurz vor Erreichen des Stillstandes reicht die Anker-EMK nicht mehr aus, um die Steuerschaltung 26 mit Strom zu versorgen. Dann ist allerdings die Drehzahl bereits so weit abgesunken, daß die restliche kinetische Energie durch die Lagerreibung innerhalb kürzester Zeit aufgebraucht ist.

Die Nennspannung der Z-Diode 43 ist so bemessen, daß nach Einleitung des Bremsbetriebes kein Basisstrom durch den Transistor 25 fließen kann, ehe die Spannung weit genug angestiegen ist, damit der Schmitt-Trigger 37 ordnungsgemäß arbeiten kann.

Wegen des geschalteten oder getakteten Betriebs des Transistors 25 setzt dieser nur verhältnismäßig wenig elektrische Leistung um, da entweder der Spannungsabfall an seiner Kollektor-Emitter-Strecke oder der Kollektorstrom klein ist. Den eigentlichen "Bremswiderstand" stellt bei leitendem Transistor 25 der Innenwiderstand des Ankers 3 dar. Bei gesperrtem Transistor 25 wird die kinetische Energie in dem Anker 3 und teilweise in der Feldwicklung 4 in Wärme umgesetzt.

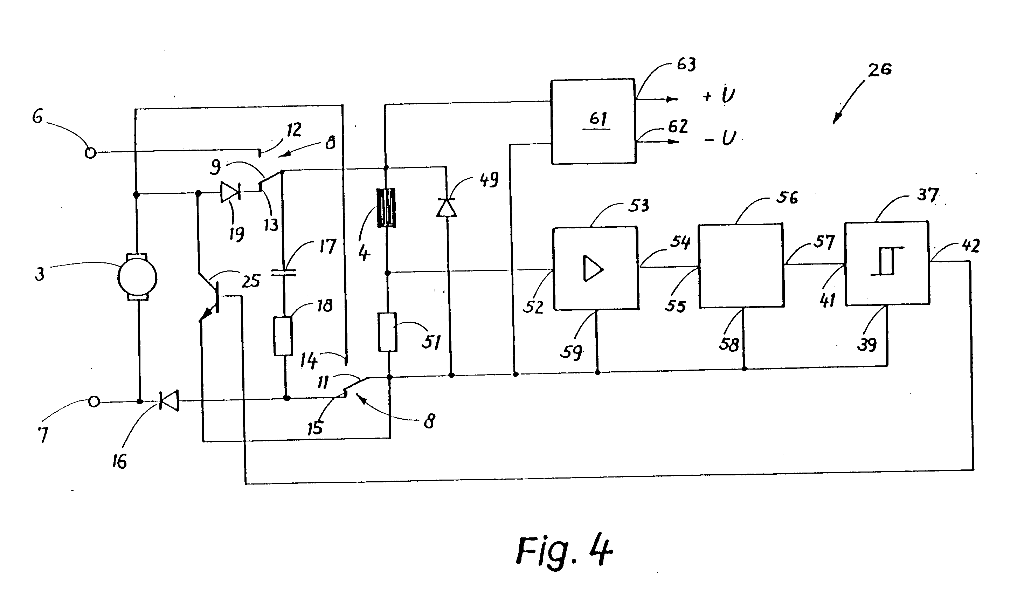

Fig. 4 zeigt ein Ausführungsbeispiel der Schaltungsanordnung 1 zum netzunabhängigen elektrischen Bremsen des Kollektormotors 2, bei dem wiederum der Transistor 25 zusammen mit einer entsprechenden Steuerschaltung 26 dazu verwendet wird, die Erregung der Feldwicklung 4 im Bremsbetrieb auf den entsprechenden Wert zu begrenzen. Allerdings wird bei dem Ausführungsbeispiel nach Fig. 4 als Schaltkriterium nicht die an der Feldwicklung 4 anstehende Spannung, sondern der Erregerstrom herangezogen, weshalb der Kondensator 27 durch eine Freilaufdiode 49 ersetzt ist. Die Umwandlung des Feldstromes in ein proportionales Spannungssignal erfolgt mittels eines niederohmigen Widerstandes 51, der zwischen die Feldwicklung 4 und den Umschaltkontakt 11 des Umschalters 8 eingefügt ist. Die Freilaufdiode 49 liegt dementsprechend zu der Serienschaltung aus der Feldwicklung 4 und dem Widerstand 51 parallel.

Bereits vorher beschriebene Bauteile sind, soweit sie in Fig. 4 wiederkehren, mit denselben Bezugszeichen versehen und nicht erneut erläutert. Die Schaltungsmasse für die Steuerschaltung 26 bildet wiederum der Umschaltkontakt 11.

Die an dem Widerstand 51 abfallende und dem Strom durch die Feldwicklung 4 pronortionale Spannung gelangt in einen Signaleingang 52 eines Verstärkers 53, dessen Signalausgang 54 mit einem Signaleingang 55 eines Tiefpaßfilters 56 verbunden ist. Das Tiefpaßfilter hat eine Grenzfrequenz, die oberhalb der Schaltfrequenz liegt, mit der der Transistor 25 ein- und ausgeschaltet wird.

Das Filter 56 weist einen Sigalausgang 57 auf, der mit dem Signaleingang 41 des Schmitt-Triggers 37 verbunden ist. Der Signalausgang 42, der bei dieser Ausführungsform ein Gegentakt-Ausgang ist, ist unmittelbar mit der Basis des Transistors 25 verbunden, weshalb die in dem vorherigen Ausführungsbeispiel enthaltene Serienschaltung aus dem Widerstand 44 und der Z-Diode 43 entbehrlich ist.

Sämtliche Schaltungsblöcke 53, 56 und 37 liegen mit ihren Masseanschlüssen 39, 58 und 59 an der Schaltungsmasse, gebildet durch den Umschältkontakt 11. Die Stromversorgung der Schaltungsblöcke 37, 53 und 56 erfolgt mittels einer Stromversorgungsschaltung 61, die eingangsseitig einerseits mit dem Umschaltkontakt 11 und andererseits mit dem Umschaltkontakt 9 verbunden ist, d.h. die an der Freilaufdiode 49 anstehende Spannung im Bremsbetrieb erhält. An ihren Ausgängen 62 und 63 gibt die Stromversorgungsschaltung 61 die gegenüber der Schaltungsmasse notwendige positive und negative Versorgungsspannung +U und -U ab. Die Arbeitsweise des Ausführungsbeispiels nach Fig. 4 ist, was das Ein- und das Ausschalten des Transistors 25 im Bremsbetrieb anbelangt, grundsätzlich dieselbe wie bei dem Ausführungsbeispiel nach Fig. 3 insofern, als oberhalb einer vorbestimmten Felderregung der Transistor 25 durchgesteuert und beim Absinken der Felderregung unter einen zweiten darunter liegenden Grenzwert der Transistor 25 wieder gesperrt wird. Das Schaltkriterium ist allerdings hierbei unmittelbar der Strom durch die Feldwicklung 4.

Nach dem Loslassen des Schalters 8 kehrt dieser in die gezeichnete Stellung zurück, wodurch ein Stromimpuls in der Feldwicklung 4 entsteht, da sich hierüber der Kondensator 17 entlädt. Eine Entladung des Kondensators 17 durch den Anker 3 wird von der Diode 19 verhindert. Infolge dieses Stromstoßes entsteht eine Magnetisierung der Feldwicklung 4 mit einer Polarität, die, wie bei den vorherigen Ausführungsbeispielen, zu einer in dem Anker 3 induzierten Spannung führt, deren Polarität die Dioden 16, 19 in Durchlaßrichtung betreibt, so daß ein lawinenartiger Anstieg der Spannung an der Feldwicklung 4 und damit des Stroms durch die Feldwicklung 4 und den Widerstand 51 auftritt. Der Stromkreis wird, wie vorher, über die Diode 16 geschlossen.

Der an dem Widerstand 51 auftretende Spannungsabfall ist die Steuerspannung für den nachfolgenden Verstärker 53, der das erhaltene Spannungssignal verstärkt und dem Filter 56 zuleitet. Das Filter 56 ist ein Tiefpaß zweiter Ordnung und hat bei Kleinmotoren eine Grenzfrequenz von etwa 10 kHz, damit Störspannungen, die von dem feuernden Kollektor ausgehen, möglichst keine Störungen auslösen. Die aus dem Filter 56 erhaltene gesiebte Steuerspannung gelangt in den Signaleingang 41 des Schmitt-Triggers 37, der hieraus ein binäres Signal formt. Übersteigt der Spannungsabfall an dem Widerstand 51 und damit der Strom durch die Feldwicklung 4 einen Grenzwert, der durch den Schmitt-Trigser 37 festgelegt ist, dann schaltet dieser seinen Signalausgang 42 auf H gegenüber der Schaltungsmasse um, wodurch in dem Transistor 25 ein Basisstrom hervorgerufen wird, der den Transistor 25 leitend steuert. Dadurch wird der Anker 3 kurzgeschlossen und augenblicklich die Stromversorgung für die Feldwicklung 4 unterbrochen. Zufolge der parallelgeschalteten Freilaufdiode 49 fließt jedoch durch die Feldwicklung 4 weiterhin ein entsprechend deren Induktivität abklingender Erregerstrom, der weiterhin zu einem Signal an dem Widerstand 51 führt. Ist der Freilaufstrom, der aus dem Stromkreis aus der Freilaufdiode 49,der Feldwicklung 4 und dem Widerstand 51 fließt, auf einen Wert abgesunken, der zu einer Signalspannung an dem Signaleingang 41 führt, der unter dem unteren Schwellwert des Schmitt-Triggers 37 liegt, so schaltet dieser seinen Signalausgang 42 auf L gegenüber der Schaltungsmasse um, womit auch der Basisstrom für den Transistor 25 wegfällt, der demzufolge sperrt. Die von dem Anker 3 abgegebene Induktionsspannung kann nun wiederum den Strom durch die Feldwicklung 4 ansteigen lassen, bis der obere Grenzwert des Schmitt-Triggers 37 überschritten wird und sich das Schaltspiel wiederholt.

Auch bei der Schaltung nach Fig. 4 wird mit einer verhältnismäßig hohen Frequenz der Transistor 25 einund ausgeschaltet, um während des Bremszyklus die Felderregung auf dem gewünschten Wert zu halten. Dabei schwankt die Felderregung zwischen zwei Werten ständig hin und her.

Obwohl dies in den Zeichnungen nicht dargestellt ist, besteht durchaus die Möglichkeit, die Schwellwerte des Schmitt-Triggers 37 während eines Bremszyklus so zu verändern, daß der Anker progressiv abgebremst wird, indem, soweit möglich, durch Verschiebung der Schwellwerte eine Erhöhung der Felderregung zugelassen wird, die ihren zeitlichen Beginn beim Umschalten auf den Bremsbeginn hat.

Sowohl die Bremsung mit nahezu konstanter Felderregung als auch die mit progressiver Felderregung führen zu Bremsmomenten, bei denen insbesondere bei handgeführten Werkzeugen nicht die Gefahr besteht, daß das Werkzeug aus der Hand gerissen wird.

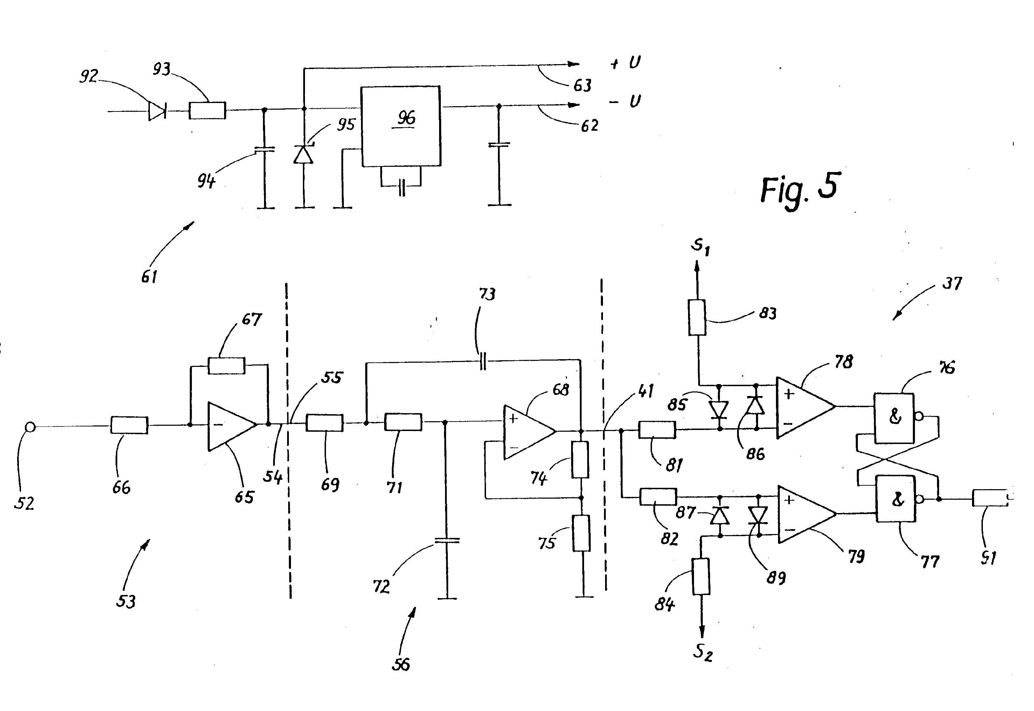

Fig. 5 zeigt ein Detailschaltbild zur Ausführung der Funktionsblöcke aus Fig. 4.

Der Verstärker 53 enthält einen gegengekoppelten invertierenden Verstärker 65, dessen invertierender Eingang über einen Widerstand 66 mit dem Eingang 52 des Verstärkers 53 verbunden ist. Außerdem ist der invertierende Eingang über einen Widerstand 67 zu dem Ausgang des Operationsverstärkers 65 gegengekoppelt. Der Ausgang des Operationsverstärkers 65 bildet den Ausgang 54 der Verstärkerstufe 53, die an den Eingang 55 des Filters 56 angeschaltet ist. Das Filter 56 ist ein aktives Filter zweiter Ordnung mit einer Grenzfrequenz von ca. 10 kHz in der üblichen bekannten Schaltung. Es enthält einen Differenzverstärker 68, dessen nicht invertierender Eingang über die Serienschaltung zweier Widerstände 69 und 71 an den Eingang 55 des Filters 56 angeschaltet ist. Ferner führt von dem nicht invertierenden Eingang ein Kondensator 72 zur Schaltungsmasse.

Ein an die Verbindungsstelle zwischen den beiden Widerständen 69 und 71 angeklemmter Kondensator 73 liegt mit seiner anderen Elektrode an dem Ausgang des Differenzverstärkers 68, von wo aus gleichzeitig zwei in Serie geschaltete Widerstände 74 und 75 nach Masse führen. An die Verbindungsstelle der beiden Widerstände 74 und 75 ist der invertierende Eingang des Differenzverstärkers 68 angeschlossen.

Die Bemessung der passiven Bauelemente 59 bis 75 des Filters 56 ist bekannt und beispielsweise in Tietze, Schenk, "Halbleiterschaltungstechnik", korrigierter Nachdruck der 3. Auflage, Springer-Verlag, Seite 330, nachzulesen.

Der sich an das Filter 56 anschließende Schmitt-Trigger 37 ist in Tietze-Schenk, "Halbleiterschaltungstechnik", 7. überarbeitete Auflage, Springer-Verlag, Heidelberg, New York, Seite 183 beschrieben. Der Schmitt-Trigger 37 enthält zwei in bekannter Weise als RS-Flipflop geschaltete Nandglieder 76 und 77, an deren R- bzw. S-Eingang zwei Differenzverstärker 78 und 79 jeweils mit ihren Ausgängen angeschaltet sind. Der invertierende Eingang des Differenzverstärkers 78 führt über einen Widerstand 81 zu dem Signaleingang 41 des Schmitt-Triggers 37, an den außerdem der nicht invertierende Eingang des Differenzverstärkers 79 über einen Widerstand 82 angeschlossen ist. Die beiden Widerstände 81 und 82 dienen zur Strombegrenzung, wenn das Eingangssignal sehr stark von den Schwellwerten abweicht.

Die Schwell- oder Grenzwerte $S_1$ bzw. $S_2$ werden über Widerstände 83 und 84 in den nicht invertierenden Eingang des Differenzverstärkers 78 bzw. den invetierenden Eingang des Differenzverstärkers 79 eingespeist.. Um die Differenzspannung zwischen den beiden Eingängen eines jeden der beiden Differenzverstärker 78 und 79 zu begrenzen, liegen zwischen diesen Eingängen jeweils zwei antiparallel geschaltete Dioden 85 und 86 bzw. 87 und 89. Die Differenzspannung wird hierdurch auf ca. 0,6 V festgelegt.

Um die Schaltfunktion des aus den Nandgliedern 76 und 77 aufgebäuten RS-Flipflops auch in dem Zustand sicherzustellen, in dem der Ausgang 42 des Schmitt-Triggers 37 auf H geschaltet ist, was H am Ausgang des Nandgliedes 77 entspricht, ist zwischen dem Ausgang des Nandgliedes 77 und dem Signalausgang 42 des Schmitt-Triggers 37 ein Vorschaltwiderstand 91 angeordnet.

Die Spannungsversorgungsschaltung 61 enthält an ihrem Spannungseingang eine Entkopplungsdiode 92, über die mit einem vorgeschalteten Strombegrenzungswiderstand 93 ein Ladekondensator 94 aus der an der Feldwicklung 4 anstehenden Spannung gegen Masse aufgeladen wird. Der Ladekondensator 94 liegt mit seiner anderen Elektrode dementsprechend an der Schaltungsmasse. Parallel zu dem Ladekondensator 94 ist eine Z-Diode 95 geschaltet, die zusammen mit dem Vorschaltwiderstand 93 die Spannung an dem Ladekondensator 94 stabilisiert, wobei an der Kathode der Z-Diode 95 die positive Versorgungsspannung +U abgegriffen wird. Diese positive Versorgungsspannung wird außerdem in einen monolithischen CMOS-Spannungswandler 96 eingespeist, der hieraus die negative Versorgungsspannung -U für die Differenzverstärker 65, 68, 78 und 79 erzeugt. Der Spannungswandler ist beispielsweise der Typ ICL7660 der Firma Intersil und in bekannter Weise außen beschaltet.

Die Spezifikationen und die Beschaltung des Spannungswandlers ICL7660 ist in einer entsprechenden Intersil-Applikationsschrift beschrieben.

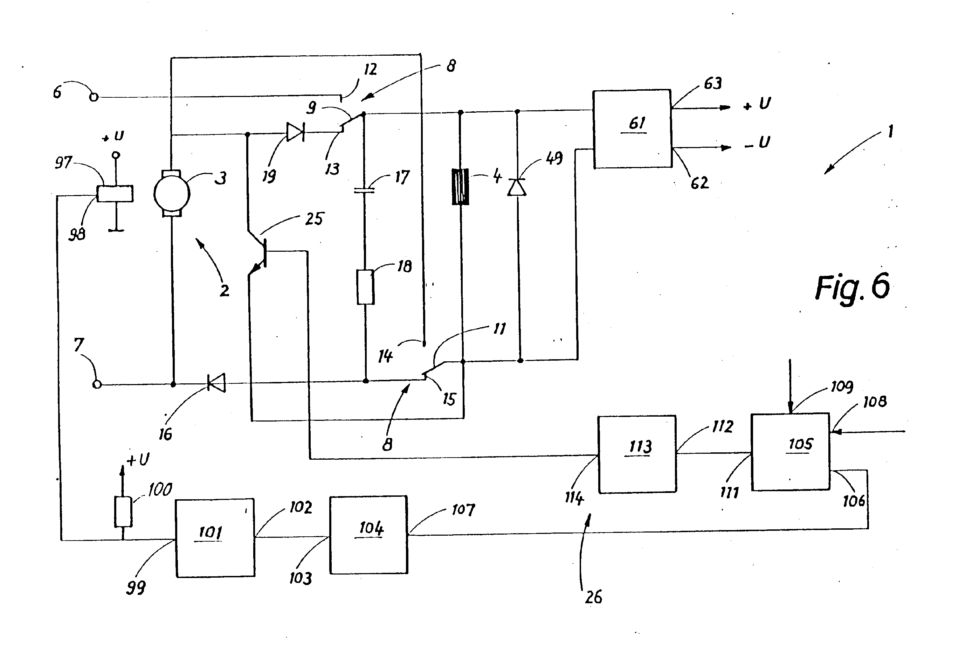

Fig. 6 zeigt ein Ausführungsbeispiel der Schaltungsanordnung 1 zum netzunabhängigen elektrischen Bremsen des Kollektormotors 2, die es gestattet, den Kollektormotor 2 unabhängig von der jeweils an den Anker 3 angekuppelten Schwungmasse immer innerhalb im wesentlichen derselben Zeit aus der Nenndrehzahl zum Stillstand abzubremsen. Die Schaltungsanordnung 1 nach Fig. 6 ist, was die unmittelbare Beschaltung der Feldwicklung 4 und des Ankers 3 anbelangt, im wesentlichen genau so aufgebäut wie bei Fig. 4, lediglich mit dem Unterschied, daß der Widerstand 51 entfallen ist. Die Erregung der Feldwicklung 4 ist wiederum getaktet geregelt mit Hilfe des NPN-Transistors 25, der periodisch wiederkehrend den Anker 3 kurzschließt, um die gewünschte Bremsverzögerung zu erzeugen.

Im Zusammenhang mit Fig. 6 wiederkehrende Bauelemente sind deswegen auch nicht erneut beschrieben.

Mit Hilfe eines Hall-Gebers 97, beispielsweise vom Typ UGS 3075U der Firma Sprague wird die Ankerdrehzahl des Kollektormotors 2 erfaßt. Das Hall-IC 97 arbeitet als inkrementaler Geber und gibt an seinem Ausgang 98, der mit einem Pull-up-Widerstand 100 beschaltet ist, ein Rechtecksignal ab, dessen Frequenz der Drehzahl des Ankers 3 proportional ist. Dieses Rechtecksignal wird in einen Eingang 99 eines Monoflops 101 eingespeist. Das Monoflop 101 formt aus dem erhaltenen Rechtecksignal ein Rechtecksignal mit gleicher Periodendauer, wobei jedoch die Impulsdauer des abgegebenen Rechtecksignals Konstant ist. Auf diese Weise wird ein periodisches Rechtecksignal erzeugt, dessen Gleichspannungsmittelwert direkt proportional zu der Drehzahl des Ankers 3 ist. Dieses Rechtecksignal gibt das Monoflop 101 an seinem Signalausgang 102 ab, der an einen Signaleingang 103 einer Differenzierschaltung 104 angeschlossen ist. Die Differenzierschaltung 104 erzeugt aus dem eingespeisten Signal ein Gleichspannungssignal, dessen Amplitude der Drehzahländerung des Ankers 3 proportional ist, d.h. dessen Amplitude der Änderung des Mittelwertes des in den Eingang 103 eingespeisten Rechtecksignals proportional ist. Das erhaltene Gleichspannungssignal gelangt in einen PID-Regler 105, dessen Signaleingang 106 dementsprechend mit dem Signalausgang 107 der Differenzierschaltung 104 verbunden ist. An einem weiteren Eingang 108 wird ein Sollwert zugeführt und an einem Eingang 109 wird ein Anfangswert vorgegeben, mit dem die Bremsung beginnt, wenn durch Loslassen des Schalters 8 seine beiden Schaltkontakte 9 und 11 in die in Fig. 6 gezeigte Lage zurückkehren.

Der PID-Regler enthält einen Ausgang 111, der mit einem Modulationseingang 112 eines pulsdauermodulierbaren Oszillators 113 verbunden ist, dessen Ausgang 114 an die Basis des Schalttransistors 25 angeschaltet ist.

9

Die Stromversorgung der Schaltungsblöcke 97, 101, 104, 105 und 113 erfolgt wiederum aus der an der Feldwicklung 4 im Bremsbetrieb abfallenden Spannung, die in die Stromversorgungsschaltung 61 eingespeist wird und die hieraus die notwendige positive und die negative Betriebsspannung für die erwähnten Schaltungsblöcke erzeugt. Die Stromversorgungsleitungen sind der Übersichtlichkeit halber nicht mit eingezeichnet.

Die insoweit beschriebene Schaltung nach Fig. 6 arbeitet folgendermaßen: Durch Betätigen des Umschalters 8 wird, wie oben bereits erläutert, der Motorbetrieb eingeschaltet, während dem aus dem Netz der Speicherkondensator 17 über den Vorwiderstand 18 nahezu auf Netzspannung aufgeladen wird. Durch Loslassen des Schalters 8 kehren die Umschaltkontakte 9 und 11 in die gezeichnete Lage zurück, wodurch der Bremsbetrieb des Kollektormotors 2 eingeschaltet wird. Da in diesem Zustand der Differentiator 104 noch nicht eingeschwungen ist, gibt der Oszillator 113 an seinem Ausgang 114 ein periodisches Rechtecksignal ab, bei dem die Impulsbreite,während der das Rechtecksignal im Zustand H ist, um den Schalttransistor 25 durchzusteuern, von dem Anfangswert festgelegt ist, der von dem PID-Regler 105 in diesen Zustand an den Oszillator 113 abgegeben wird. Bereits ab diesem Zeitpunkt wird folglich der Schalttransistor 25 periodisch ein- und ausgeschaltet, um eine zur Zeit noch ungeregelte Begrenzung der Felderregung zu erzeugen.

Unmittelbar seit Einschalten des Bremsbetriebes erzeugt der inkrementale Geber 97 das drehzahlproportionale Signal, das in das Monoflop 101 eingespeist wird. Dieses formt hieraus ein periodisches Rechtecksignal, dessen Periodendauer der Periodendauer des eingespeisten Signals entspricht und dessen Gleichspannungsmittelwert der Drehzahl proportional ist. In der nachfolgenden Differenzierschaltung 104 wird zunächst das Rechtecksignal gesiebt,um ein Gleichspannungssignal zu erhalten, dessen Momentanwert proportional zu der Drehzahl des Ankers 3 ist. Dieses drehzahlproportionale Signal, das sich mit der Zeit allmählich ändert, wird differenziert, um ein Signal zu erzeugen, dessen Amplitude der Drehzahländerung entspricht. Dieses Signal wird von dem PID-Regler 105 mit dem Sollwert verglichen, der die Änderungsgeschwindigkeit für die Drehzahl festlegt.

Wenn der PID-Regler 105 bei dém Vergleich des Sollwertsignals mit dem aus dem Differentiator 104 erhaltenen Istwertsignal feststellt, daß eine Differenz vorliegt, so wird in dem PID-Regler, ausgehend von dem Anfangswert mit der dem PID-Regler eigenen Zeitkonstanten, das Eingangssignal so lange integriert, bis der Fehler null ist. Gleichzeltig mit der Integration ändert sich an dem Ausgang 111 das Signal zur Modulation des pulsweitenmodulierbaren Oszillators 113, der daraufhin innerhalb der Periode jeweils längere oder kürzere Auftastimpulse an den Transistor 25 abgibt.

Infolge dieser rückgekoppelten Anordnung folgt die Drehzahländerung des Ankers 3 im Bremsbetrieb dem vorgegebenen Sollwert, unabhängig davon, wie groß die mit dem Anker 3 gekuppelten Schwungmomente oder Reibungsverluste sind. Ist die Schwungmasse sehr groß, dann sind die Impulse,mit denen der Transistor 25 durchgesteuert wird, kleiner, verglichen mit dem Betriebsfall der kleinen angekuppelten Schwungmasse, damit sich eine hohe Felderregung ergibt, die ein entsprechend stärkeres Bremsen des Ankers 3 hervorruft.

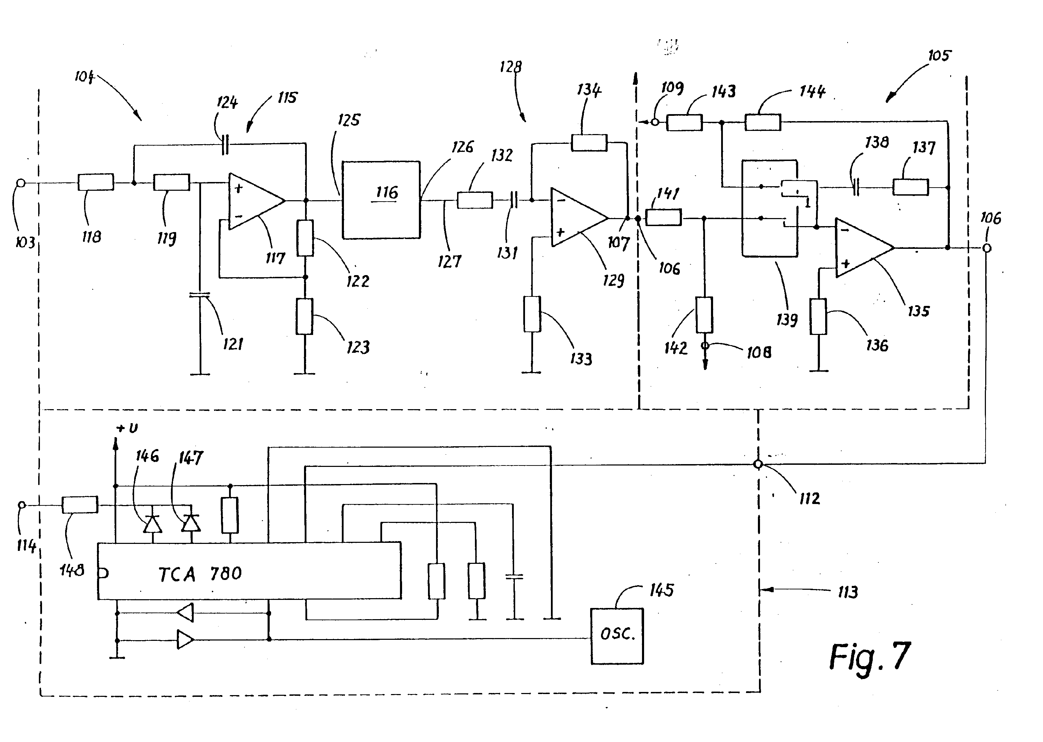

Ein Detailschaltbild für den Differentiator 104, den PID-Regler 105 und den pulsbreitenmodulierbaren Oszillator 113 ist in Fig. 7 angegeben. Der Differentiator 104 enthält hintereinandergeschaltet zwei Tiefpaßfilter 115 und 116, die identisch aufgebaut sind, weshalb es genügt, lediglich das Tiefpaßfilter 115 zu beschreiben. Dieses Tiefpaßfilter 115 enthält einen Differenzverstärker 117, der mit seinem nicht invertierenden Eingang über die Serienschältung zweier Widerstände 118, 119 mit dem Eingang 103 des Differentiators 104 verbunden ist. Ferner führt von dem nicht invertierenden Eingang ein Kondensator 121 zur Schaltungsmasse. Zur Schaltungsmasse führt ebenso die Serienschaltung zweier Widerstände 122, 123, die anderenends an dem Ausgang des Differenzverstärker 117 angeschlossen ist. Ein Gegenkopplungskondensator 124 liegt zwischen dem Ausgang des Differenzverstärkers 117 und der Verbindungsstelle der beiden Widerstände 118, 119.

Die Arbeitsweise und Dimensionierung dieses aktiven Tiefpaßfilters mit einer Grenzfrequenz von 10 Hz ist in Tietze-Schenk, "Halbleiterschaltungstechnik", korrigierter nachdruck der 3. Auflage, Springer-Verlag, Seite 306 ff. beschrieben.

Der Ausgang des Differenzverstärkers 117 bildet gleichzeitig den Ausgang dieser ersten Filterstufe 115, die an einen Eingang 125 der nachfolgenden identisch aufgebauten Filterstufe angeschlossen ist. Ihr Ausgang 126 ist an einen Eingang 127 eines nachgeschalteten aktiven Hochpaßfilters 128 angeschlossen. Das aktive Hochpaßfilter 128, dessen Dimensionierung in der oben erwähnten Literaturstelle beschrieben ist, enthält einen Differenzverstärker 129, dessen invertierender Eingang über die Serienschaltung aus einem Kondensator 131 und einem Widerstand 132 zu dem Eingang 127 der Filterstufe hin verbunden ist. Der nicht invertierende Eingang des Differenzverstärkers 129 liegt über einen Widerstand 133 an der Schaltungsmasse. Außerdem ist der Differenzverstärkers 129 über einen Widerstand 134 von seinem Ausgang zu seinem invertierenden Eingang hin gegengekoppelt. Der Ausgang des Differenzverstärkers 129 bildet den Ausgang 107 des Differentiators, der an seinem Ausgang das gewünschte, der Drehzahländerung proportionale Analogsignal abgibt. Dieses Signal gelangt in den PID-Regler 105, der als aktives Element einen Differenzverstärker 135 aufweist. Der nicht invertierende Eingang dieses Differenzverstärkers ist über einen Widerstand 136 geerdet und außerdem ist der Ausgang des Differenzverstärkers 135 über die Serienschaltung eines Widerstandes 137 sowie eines Kondensators 138 zu dem invertierenden Eingang gegengekoppelt, wobei der Kondensator 138 der eigentliche Integrationskondensator ist.

Zwischen dem invertierenden Eingang des Differenzverstärkers 135 und dem Eingang 106 des PID-Reglers liegt eine Schaltstrecke eines zweppoligen integrierten Analogschalters 139, über den wahlweise die Verbindung des invertierenden Eingangs zu dem Signaleingang 106 geschaltet werden kann. Zwischen dem Analogschalter 139 und dem Signaleingang 106 ist außerdem ein Widerstand 141 eingefügt und es ist an die Verbindungsstelle zwischen dem Widerstand 141 mit dem integrierten Anaogschalter 139 ein Widerstand 142 angeschaltet, über den der Sollwert mit umgekehrtem Vorzeichen zugeführt wird. An dem Verbindungsknoten zwischen den beiden Widerständen 141 und 142 entsteht auf diese Weise die Addition von Soll- und Istwert.

Zur Anfangswerteinstellung ist an dem Ausgang des Operationsverstärkers 135 ferner die Serienschaltung aus zwei Widerständen 143, 144 angeklemmt, die mit ihrem anderen Ende zu einer Spannungsquelle für den Sollwert oder der positiven Versorgungsspannung hin führt.

Der Verbindungsknoten zwischen den beiden Widerständen 143, 144 liegt an einer weiteren Umschaltstrecke des integrierten Analogschalters 139, damit, wie dargestellt, je nach Schaltstellung entweder der Verbindungsknoten geerdet wird oder mit dem invertierenden Eingang des Differenzverstärkers 135 verbunden werden kann. Die Schaltstrecken des integrierten Analogsctialters sind miteinander synchronisiert, so daß mit dem invertierenden Eingang des Differenzverstärkers 135 entweder die Verbindungsstelle zwischen den Widerständen 143 und 144 oder die Verbindungsstelle zwischen den Widerständen 141 und 142 verbunden ist.

Der Aufbau und die Betriebsweise eines solchen Integrators ist ebenfalls der Literaturstelle Tietze,Schenk, "Halbleiterschaltungstechnik",korrigierter Nachdruck der 3. Auflage, ab Seite 241 zu entnehmen.

Der PID-Regler 105 ist mit seinem Ausgang 106, der vor dem Ausgang des Differenzverstärkers 135 gebildet ist, an den nachfolgenden pulsweitenmodulierbaren Oszillator 113 angeschlossen. Dieser pulsweitenmodulierbare Oszillator enthält einen Rechteckgenerator 145, der ein periodisches Rechtecksignal konstanter Frequenz (ca.1 kHz) und mit einem Tastverhältnis 1:1 abgibt. Oszillatoren dieser Art sind in einer Vielzahl bekannt und brauchen deswegen an dieser Stelle nicht beschrieben zu werden. Die eigentliche Pulsweitenmodulation des aus dem Oszillator 145 erhaltenen Signals erfolgt mit einer Schaltungsanordnung, wie sie für Phasenanschnittsteuerungen bekannt ist. Es sind hierfür integrierte Schaltungen verfügbar, beispielsweise die integrierte Phasenanschnittsteuerung TCA780 der Firma Siemens, deren Anwendung in "Techische Mitteilungen aus dem Bereich Bauelemente, Intefriete Phasenanschnittsteuerung TCA 780 für die Leitungselektronik, Best.Nr. B 1884 der Firma Siemens" in ihrem Aufbau und in ihrer äußeren Beschaltung erläutert ist. Im Rahmen der Beschreibung der Erfindung genügt es, an dieser Stelle auszuführen, daß das aus dem Oszillator 145 erhaltene Rechtecksignal PIN 5 der integrierten Schaltung TCA780 zugeführt wird, die hieraus an ihren Ausgängen PIN 14 und PIN 15 das gewünschte Signal erzeugt, das über an die jeweiligen Ausgänge angeschlossene Dioden 146 und 147 sowie einen Längswiderstand 148 dem Ausgang 114 zugeführt wird. .

## Patentansprüche

1. Schaltungsanordnung zum von einer äußeren Stromversorgung unabhängigen Bremsen eines Kollektormotors (2), der einen Anker (3) und wenigstens eine geteilte oder ungeteilte Feldwicklung (4, 5) aufweist; mit Schaltermitteln (8), über die der Anker (3) und die Feldwicklung (4, 5) in einer ersten Polung zueinander an eine äußere Stromversorgung anschaltbar und durch die der Anker (3) und die Feldwicklung (4, 5) in einer anderen Polung zueinander in den Bremsbetrieb umschaltbar sind, in dem zumindest ein Teil (4) der Feldwicklung (4, 5) an den Anker (3) angeschaltet ist; mit lediglich im Bremsbetrieb wirksamen Mitteln (21, 22, 25, 26) zum Beeinflussen der Felderregung, die im Bremsbetrieb über die Schaltermittel (8) an den Anker (3) angeschaltet sind und die im wesentlichen temperaturunabhängig arbeiten; und mit Speichermitteln (17) zur Einleitung der Selbsterregung im Bremsbetrieb, die im Motorbetrieb über die Schaltermittel (8) an die äußere Stromversorgung angeschaltet sind, dadurch gekennzeichnet, daß die Speichermittel (17) sowie der im Bremsbetrieb wirksame Teil (4) der Feldwicklung (4, 5) nach der Umschaltung in den Bremsbetrieb zueinander parallelgeschaltet sind, um nach der Umschaltung in den Bremsbetrieb einen Feldstrom zu erzeugen, daß dem Anker (3) die Mittel (21, 22, 25, 26) zum Beeinflussen der Felderregung parallelgeschaltet sind, daß zu dieser Parallelschaltung über ein Element (19) mit Diodencharakteristik die Parallelschaltung aus den Speichermitteln (17) und dem entsprechenden Teil (4) der Feldwicklung (4, 5) parallel liegt und daß die die Felderregung beeinflussenden mittel (21, 22, 25, 26) eine Charakteristik aufweisen, durch die die Felderregung zumindest in einem die Anfangsnenndrehzahl im Bremsbetrieb enthaltenen Drehzahlbereich des Ankers (3) zumindest quasi konstant gehalten ist, wodurch das maximal auftretende Bremsmoment vermindert und auf einen vorgebbaren Wert begrenzbar ist.

2. Schaltungsanordnung nach Anspruch 1, dadurch gekennzeichnet, daß die die Felderregung beeinflussenden Mittel (25, 26) eine mit abnehmender Ankerdrehzahl die Felderregung erhöhende Charakteristik aufweist.

3. Schaltungsanordnung nach Anspruch 1, dadurch gekennzeichnet, daß die die Felderregung beeinflussenden Mittel von einem Zweipol (21, 22) mit der Kennlinie einer Z-Diode gebildet sind.

4. Schaltungsanordnung nach Anspruch 3, dadurch gekennzeichnet, daß der Zweipol (21, 22) wenigstens eine Z-Diode (23) enthält bzw. von einer Z-Diode (21) gebildet ist.

5. Schaltungsanordnung nach Anspruch 1, dadurch gekennzeichnet, daß die die Felderregung beeinflussenden Mittel (25, 26) nach Art eines Zweipunktreglers arbeitend bis zum Ansteigen der Felderregung auf einen ersten Grenzwert parallel zu dem Anker (3) eine große Impedanz und bis zum Abfallen der Felderregung auf einen unter dem ersten Grenzwert liegenden zweiten Grenzwert parallel zu dem Anker (3) eine kleine Impedanz bilen, und daß sich die Schaltzustände während eines Bremszyklus periodisch abwechseln.

6. Schaltungsanordnung nach Anspruch 1, dadurch gekennzeichnet, daß die die Felderregung beeinflussenden Mittel (25, 26) parallel zu dem Anker (3) eine periodisch sich ändernde Impedanz aufweisen, wobei sich entweder die periodisch wiederkehrende Dauer während der die Mittel zur Beeinflussung der Felderregung eine niedrige Impedanz oder die sich wiederkehrende Dauer hoher Impedanz der die Felderregung beeinflussenden Mittel über die Bremszeit verändert, während die jeweils andere Dauer über die Bremszeit im wesentlichen konstant gehalten ist oder sich entsprechend vermindert.

7. Schaltungsanordnung nach Anspruch 5 und 6, dadurch gekennzeichnet, daß die die Felderregung beeinflussenden Mittel (25, 26) einen im Bremsbetrieb wirksamen und zu dem Anker (3) parallelliegenden elektronischen Schalter (25) enthalten, der im Bremsbetrieb Periodisch ein- und ausgeschaltet wird.

8. Schaltungsanordnung nach Anspruch 5, dadurch gekennzeichnet, daß der erste und/oder zweite Grenzwert bis kurz vor Erreichen des Stillstandes ansteigt.

9. Schaltunasanordnung nach Anspruch 5 und 7, dadurch gekennzeichnet, daß die die Felderregung beeinflussenden Mittel (25, 26) zur Betätigung des elektronischen Schalters (25) eine Steuerschaltung (26) aufweisen, die an ihrem Eingang ein der Felderregung entsprechendes Signal erhält und an deren Ausgang (42) der Steuereingang des elektronischen Schalters (25) angeschlossen ist.

10. Schaltungsanordnung nach Anspruch 9, dädurch gekennzeichnet, daß das der Felderregung entsprechende Signal von der an der Feldwicklung (4, 5) oder dem zu der Bremsung herangezogenen Teil (4) der Feldwicklung (4, 5) anliegenden Feldspannung gebildet ist, die in den Eingang der Steuerschaltung (26) eingespeist wird.

11. Schaltüngsanordnung nach Anspruch 9, dadurch gekennzeichnet, daß das der Felderregung entsprechende Signal von dem Feldstrom gebildet ist.

12. Schaltungsanordnung nach Anspruch 11, dadurch gekennzeichnet, daß in Serie mit der Feldwicklung (4, 5) im Bremsbetrieb ein Stromspannungswandler (51) geschaltet ist, der an seinem Ausgang eine dem Feldstrom proportionale Spannung abgibt, die in die Steuerschaltung (26) eingespeist wird.

13. Schaltungsanordnung nach Anspruch 12, dadurch gekennzeichnet, daß der Stromspannungswandler von einem mit der Feldwicklung (4, 5) in Serie liegenden ohmschen Widerstand (51) gebildet ist.

14. Schaltungsanordnung nach Anspruch 9, dadurch qekennzeichnet, daß die Steuerschaltung (26) einen Schmitt-Trigger (37) enthält, dessen Ausgangssignal das Steuersignal für den elektronischen Schalter (25) bildet.

15. Schaltungsanordnung nach Anspruch 14, dadurch gekennzeichnet, daß zwischen dem Eingang der Steuerschaltung (26) und dem Schmitt-Trigger (37) ein Tiefpaßfilter (56) geschaltet ist, dessen Grenzfrequenz höher liegt als die Schaltfrequenz, mit der der elektronische Schalter (25) periodisch ein- und ausgeschaltet wird.

16. Schaltungsanordnung nach Anspruch 6 und 7, dadurch gekennzeichnet, daß die die Felderregung beeinflussenden Mittel (25, 26) zur Betätigung des elektronischen Schalters (25) eine Steuerschaltung (26) aufweisen, die an ihrem Eingang ein der Ankerdrehzahl proportionales Signal erhält und die zur Steuerung des Schalters (25) einen Oszillator (113) mit Pulsweitemodulation enthält, dessen Ausgangssignal (114) das Steuersignal für den elektronischen Schalter (25) darstellt.

17. Schaltungsanordnung nach Anspruch 16, dadurch gekennzeichnet, daß die Steuerschaltung (26) einen PID-Regler (105) mit Anfangswerteinstellung aufweist, dessen Ausgangssignal (111) die Pulsweite des pulsweitenmodulierten Oszillators (113) festlegt und dessen Eingangssignal (106) von der Differenz der Drehzahländerung des Ankers (3) gegenüber einem Sollwert (108) gebildet ist.

18. Schaltungsanordnung nach Anspruch 5 oder 6, dadurch gekennzeichnet, daß zu dem im Bremsbetrieb wirksamen Teil (4) der Feldwicklung (4, 5) ein Speicherkondensator (27) parallelgeschaltet ist, der bei niedriger Impedanz der die Felderregung beeinflusseden Mittel (25, 26) die Felderregung aufrecht erhält.

19. Schaltungsanordnung nach Anspruch 5 oder 6, dadurch gekennzeichnet, daß zu dem im Bremsbetrieb wirksamen Teil (4) der Feldwicklung (4, 5) eine Freilaufdiode (49) parallelgeschaltet ist.

20. Schaltungsanordnung nach Anspruch 1, dadurch gekennzeichnet, daß die Speichermittel zum Einleiten der Selbsterregung einen Kondensator (17) enthalten, zu dem gegebenenfalls ein Strombegrenzungswiderstand (18) in Serie liegt.

21. Schaltunasanordnung nach Anspruch 1, dadurch gekennzeichnet, daß bei in den Bremsbetrieb umgeschaltetem Motor (2) in wenigstens einer der Verbindungsleitungen zwischen dem Anker (3) und dem im Bremsbetrieb wirksamen Teil (4) der Feldwicklung (4, 5) eine Diode (16) liegt, die derart gepolt ist, daß bei hoher Impedanz der die Felderregung beeinflussenden Mittel (25, 26) die Generatorspannung des Ankers (3) einen Feldstrom erzeugt, und daß die Speichermittel (17) zur Einleitung der Selbsterregung auf derselben Seite der Diode (16) angeschlossen sind wie der im Bremsbetrieb wirksame Teil (4) der Feldwicklung (4, 5).

22. Schaltungsanordnung nach Anspruch 1, dadurch gekennzeichnet, daß bei in den Bremsbetrieb umgeschalteten Motor (2) zwischen der Impedanz (25) der die Felderregung beeinflussenden Mittel (25, 26) und dem im Bremsbetrieb wirksamen Teil (4) der Feldwicklung (4, 5) eine Diode (19) geschaltet ist, die bei niedriger Impedanz der die Felderregung beeinflussenden Mittel (25, 26) einen Strom von dem im Bremsbetrieb wirksamen Teil (4) der Feldwicklung (4, 5) zu der niedrigen Impedanz sperrt.


## Claims

1. A circuit arrangement for the braking independently of an external power source of a commutator motor (2) having an armature (3) and at least one divided or undivided field coil (4, 5), the arrangement having: switch means (8) via which the armature (3) and the field coil (4, 5) can be connected in a first polarity in relation to one another to an external power supply and via which the armature (3) and the field coil (4, 5) can be switched over in a different polarity in relation to one another to braking operation, in which at least a part (4) of the field coil (4, 5) is connected to the armature (3); means (21, 22, 25, 26) operative solely in braking operation for influencing the field excitation which in braking operation are connected via the switch means (8) to the armature (3) and which operate substantially independently of temperature; and storage means (17) for initiating self-excitation in braking operation which are connected during motor operation via the switch means (8) to the external power supply, characterized in that after switchover to braking operation, the storage means (75) and the part (4) of the field coil (4, 5) operative in braking operation are connected in parallel to one another, to generate a field current after switchover to braking operation: the means (21, 22, 25, 26) for influencing the field excitation are connected in parallel to the armature (3); the parallel connection from the storage means (17) and the corresponding part (4) of the field coil (4, 5) is in parallel with the aforesaid parallel connection via an element (19) of diode characteristic; and the means (21, 22, 25, 26) influencing the field excitation have a characteristic by which the field excitation is maintained at least quasi-constant over a speed range of the armature (3) containing the initial rated speed in braking operation, so that the maximum braking force occurring is reduced and can be limited to a predeterminable value.

2. A circuit arrangement according to claim 1, characterized in that the means (25, 26) influencing the field excitation have a characteristic which increases the field excitation as the armature speed decreases.

3. A circuit arrangement according to claim 1, characterized in that the means influencing the field excitation are formed by a diode (21, 22) having the characteristic of a Zener diode.

4. A circuit arrangement according to claim 3, characterized in that the diode (21, 22) comprises at least one Zener diode (23) or is formed by a Zener diode (21).

5. A circuit arrangement according to claim 1, characterized in that the means (25, 26) influencing the field excitation, operating after the fashion of a two-step controller, form a high impedance parallel with the armature (3) until the field excitation rises to a first limit value, and form a low impedance parallel with the armature (3) until the field excitation drops to a second limit value which is lower than the first limit value, and the switching states periodically alternate during a braking cycle.

6. A circuit arrangement according to claim 1, characterized in that the means (25, 26) influencing the field excitation have parallel with the armature (3) an impedance which changes periodically, either the periodically recurring duration during which the means for influencing the field excitation have a low impedance or the recurring duration during which the means influencing the field excitation have a high impedance changing over the braking period, while the other duration is maintained substantially constant over the braking period or is correspondingly reduced.

7. A circuit arrangement according to claims 5 and 6, characterized in that the means (25, 26) influencing the field excitation comprise an electronic switch (25) which is in parallel with the armature (3) and which is operative in braking operation and which is periodically switched on and off during braking operation.

8. A circuit arrangement according to claim 5, characterized in that the first and/or second limit value increases until shortly before stoppage is reached.

9. A circuit arrangement according to claims 5 and 7, characterized in that the means (25, 26) influencing the field excitation have for the actuation of the electronic switch (25) a control circuit (26) which receives at its input a signal corresponding to the field excitation and to whose output (42) the control input of the electronic switch (25) is connected.

10. A circuit arrangement according to claim 9, characterized in that the signal corresponding to the field excitation is formed by the field voltage which is applied to the field coil (4, 5) or to the part (4) of the field coil (4, 5) used for braking and which is supplied to the input of the control circuit (26).

11. A circuit arrangement according to claim 9, characterized in that the signal corresponding to the field excitation is formed by the field current.

12. A circuit arrangement according to claim 11, characterized in that a current/voltage transducer (51) which is connected in series to the field coil (4, 5) in brake operation delivers at its output a voltage which is proportional to the field current and which is supplied to the control circuit (26).

13. A circuit arrangement according to claim 12, characterized in that the current/voltage transducer is formed by an ohmic resistor (51) in series with the field coil (4, 5).

14. A circuit arrangement according to claim 9, characterized in that the control circuit (26) comprises a Schmitt trigger (37) whose output signal forms the control signal for the electronic switch (25).

15. A circuit arrangement according to claim 14, characterized in that connected between the input of the control circuit (26) and the Schmitt trigger (17) is a low-pass filter (56) whose limit frequency is higher than the switching frequency at which the electronic switch (25) is periodically switched on and off.

16. A circuit arrangement according to claims 6 and 7, characterized in that the means (25, 26) influencing the field excitation have for the actuation of the electronic switch (25) a control circuit (26) which receives at its input a signal proportional to the armature speed and which comprises for the control of the switch (25) an oscillator (113) with pulse width modulation whose output signal (114) is the control signal for the electronic switch (25).

17. A circuit arrangement according to claim 16, characterized in that the control circuit (26) has a PID controller (105) whose output signal (111) determines the pulse width of the pulse-width-modulated oscillator (113) and whose input signal (106) is formed by the difference between the change in speed of the armature (3) in comparison with a required value (108).

18. A circuit arrangement according to claims 5 or 6, characterized in that connected in parallel to the part (4) of the field coil (4, 5) operative in braking operation is a storage capacitor (27) which maintains the field excitation with a low impedance of the means (25, 26) influencing the field excitation.

19. A circuit arrangement according to claims 5 or 6, characterized in that a free-wheeling diode (49) is connected in parallel to the part (4) of the field coil (4, 5) operative in braking operation.

20. A circuit arrangement according to claim 1, characterized in that the storage means for initiating the self-excitation comprise a capacitor (27) with which a current-limiting resistor (18) is possibly connected in series.

21. A circuit arrangement according to claim 1, characterized in that with the motor (2) switched over to braking operation, at least one of the connecting cables between the armature (3) and the part (4) of the field coil (4, 5) operative in braking operation incorporates a diode (16) whose polarity is such that the generator voltage of the armature (3) generates a field current with a high impedance of the means (25, 26) influencing the field excitation, and the storage means (17) for initiating self-excitation are connected on the same side of the diode (16) as the part (4) of the field coil (4, 5) operative in braking operation.

22. A circuit arrangement according to claim 1, characterized in that with the motor (2) switched over to braking operation, connected between the impedance (25) of the means (25, 26) influencing the field excitation and the part (4) of the fielding coil (4, 5) operative in braking operation is a diode (19) which blocks a current from the part (4) of the field coil (4, 5) operative in braking operation to the low impedance in the case of a low impedance of the means (25, 26) influencing the field excitation.

## Revendications

1. Circuit pour le freinage indépendant d'une source d'alimentation extérieure en courant électrique d'un moteur à collecteur (2) qui présente un induit (3) et au moins un enroulement d'excitation en une ou en plusieurs parties (4, 5), comportant : des moyens de commutation (8) à l'aide desquels l'induit (3) et l'enroulement d'excitation (4, 5) sont reliés à une alimentation extérieure en courant électrique avec une première polarisation l'un par rapport à l'autre et à l'aide desquels l'induit (3) et l'enroulement d'excitation (4, 5) sont commutés en mode freinage avec une polarisation différente l'un par rapport à l'autre, mode dans lequel une partie (4) au moins de l'enroulement d'excitation (4, 5) est connectée à l'induit (3); des moyens (21, 22, 25, 26) pour agir sur l'excitation du champ qui ne sont actifs qu'en mode freinage, sont connectés à l'induit (3) en mode freinage à l'aide des moyens de commutation (8) et dont le fonctionnement est essentiellement indépendant de la température; et des moyens d'accumulation (17) pour amorcer l'auto-excitation en mode freinage qui sont connectés à l'alimentation extérieure en courant électrique par l'intermédiaire des moyens de commutation (8), caractérisé en ce que les moyens d'accumulation (17) et la partie (4) de l'enroulement d'excitation (4, 5) active en mode freinage sont connectés en parallèles après commutation en mode freinage afin de produire, après commutation, un courant inducteur, en ce que les moyens (21, 22, 25, 26) pour agir sur l'excitation du champ sont connectés en parallèle avec l'induit (3), en ce que le circuit parallèle composé des moyens d'accumulation (17) et de la partie correspondante (4) de l'enroulement d'excitation (4, 5) est branché en parallèle avec ce montage parallèle par l'intermédiaire d'un élément (19) qui se comporte comme une diode et en ce que les moyens pour agir sur l'excitation du champ (21, 22, 25, 26) ont une caractéristique telle que l'excitation du champ est maintenue au moins sensiblement constante au moins à l'intérieur d'une plage de vitesse de rotation de l'induit (3) englobant la vitesse de rotation nominale initiale en mode freinage, ce qui réduit le couple de freinage maximal et permet de le limiter à une valeur prédéterminée.

2. Circuit selon la revendication 1, caractérisé en ce que les moyens pour agir sur l'excitation du champ (25, 26) ont une caractéristique qui augmente au fur et à mesure que la vitesse de rotation de l'induit diminue.

3. Circuit selon la revendication 1, caractérisé en ce que les moyens pour agir sur l'excitation du champ sont constitués par un dipôle (21, 22) ayant la caractéristique d'une diode Zener

4. Circuit selon la revendication 3, caractérisé en ce que le dipôle (21, 22) comporte au moins une diode Zener (23) ou est formé d'une diode Zener (21).

5. Circuit selon la revendication 1, caractérisé en ce que les moyens pour agir sur l'excitation du champ (25, 26) travaillent à la manière d'un régulateur à deux points et forment une grande impédance en parallèle avec l'induit (3) jusqu'à ce que l'excitation du champ atteigne un premier seuil et une faible impédance en parallèle avec l'induit (3) jusqu'à ce que l'excitation du champ chute au-dessous d'un deuxième seuil inférieur au premier, et en ce que les états de commutation changent périodiquement au cours d'un cycle de freinage.

6. Circuit selon la revendication 1, caractérisé en ce que les moyens pour agir sur l'excitation du champ (25, 26) présentent une impédance en parallèle avec l'induit qui varie de manière cyclique, soit la durée cyclique pendant laquelle les moyens pour agir sur l'excitation du champ ont une faible impédance, soit la durée cyclique pendant laquelle les moyens pour agir sur l'excitation du champ ont une forte impédance variant au cours du temps de freinage, tandis que l'autre durée est maintenue essentiellement constante ou diminue en conséquence en fonction u temps de freinage.

7. Circuit selon les revendications 5 et 6, caractérisé en ce que les moyens pour agir sur l'excitation du champ (25, 26) comportent un commutateur électronique (25) qui est actif en mode freinage, est branché en parallèle avec l'induit (3) et met en action et coupe périodiquement le mode freinage.

8. Circuit selon la revendication 5, caractérisé en ce que le seuil supérieur et/ou le seuil inférieur augmente juste avant d'atteindre l'arrêt.

9. Circuit selon les revendications 5 et 7, caractérisé en ce que les moyens pour agir sur l'excitation du champ (25, 26) comportent, pour l'actionnement du commutateur électronique (25), un circuit de commande (26) à l'entrée duquel est appliqué un signal qui correspond à l'excitation du champ et à la sortie (42) duquel est reliée l'entrée de commande du commutateur électronique (25).

10. Circuit selon la revendication 9, caractérisé en ce que le signal correspondant à l'excitation du champ est formé par la tension appliquée à l'enroulement d'excitation (4, 5) ou à la partie (4) de l'enroulement d'excitation (4, 5) utilisée pour le freinage, laquelle tension est appliquée à l'entrée du circuit de commande (26).

11. Circuit selon la revendication 9, caractérisé en ce que le signal correspondant à l'excitation du champ est formé par le courant d'excitation.

12. Circuit selon la revendication 11, caractérisé en ce qu'un convertisseur de tension (51) est branché en série avec l'enroulement d'excitation (4, 5) en mode freinage, lequel convertisseur de tension délivre à sa sortie une tension proportionnelle au courant d'excitation qui est envoyée au circuit de commande (26).

13. Circuit selon la revendication 12, caractérisé en ce que le convertisseur de tension est constitué par une résistance ohmique (51) branchée en série avec l'enroulement d'excitation (4, 5).

14. Circuit selon la revendication 9, caractérisé en ce que le circuit de commande (26) comporte une bascule de Schmitt (37) dont le signal de sortie constitue le signal de commande du commutateur électronique (25).

15. Circuit selon la revendication 14, caractérisé en ce qu'un filtre passe-bas (56) est branché entre l'entrée du circuit de commande (26) et la bascule de Schmitt (37), la fréquence fondamentale du filtre étant supéreure à la fréquence de commutation à laquelle le commutateur électonique (25) est mis en action et est coupé périodiquement.

16. Circuit selon les revendications 6 et 7, caractérisé en ce que les moyens pour agir sur l'excitation du champ (25, 26) comportent, pour l'actionement du commutateur électronique (25), un circuit de commande (26) à l'entrée duquel est appliqué un signal qui est proportionnel à la vitesse de rotation de l'induit et qui comporte, pour la commande du commutateur (25), un oscillateur (113) à modulation de la largeur d'inpulsion dont le signal de sortie (114) constitue le signal de commande du commutateur électronique (25).

17. Circuit selon la revendication 16, caractérisé en ce que le circuit de commande (26) comporte un régulateur PID (105) à réglage de valeur initiale dont le signal de sortie (111) détermine la largeur d'impulsion de l'oscillateur à modulation de la larguer d'impulsion (113) et dont le signal d'entrée (106) est formé par la différence entre la variation de la vitesse de l'induit (3) et une valeur théorique (108).

18. Circuit selon les revendications 5 ou 6, caractérisé en ce qu'un condensateur d'accumulation (27) est branché en parallèle avec la partie (4) de l'enroulement d'excitation (4, 5) active en mode freinage lequel condensateur maintient l'excitation du champ lorsque les moyens pour agir sur l'excitation du champ (25, 26) ont une faible impédance.

19. Circuit selon les revendications 5 ou 6, caractérisé en ce qu'une diode de roue libre (49) est branchée en parallèle avec la partie (4) de l'enroulement d'excitation (4, 5) active en mode freinage.

20. Circuit selon la revendication 1, caractérisé en ce que les moyens d'accumulation pour l'amorçage de l'auto-excitation comprennent un condensateur (17) avec lequel une résistance de limitation de courant (18) est éventuellement montée en série.

21. Circuit selon la revendication 1, caractérisé en ce que, lorsque le moteur (2) est commuté en mode freinage, une diode (16) au moins se trouve dans le circuit entre l'induit (3) et la partie (4) de l'enroulement d'excitation (4, 5), laquelle diode est polarisée de manière telle que la tension d'alternateur de l'induit (3) produise un courant d'excitation lorsque les moyens pour agir sur l'excitation du champ (25, 26) ont une imppédance élevée, et en ce que les moyens d'accumulation (17) pour l'amorçage de l'auto-excitation sont branchés du même côté de la diode (16) que la partie (4) de l'enroulement d'excitation (4, 5) active en mode freinage.

22. Cicuit selon la revendication 1, caractérisé en ce que, lorsque le moteur (2) est commuté en mode freinage, une diode (19) au moins est branchée entre l'impédance (25) des moyens pour agir sur l'excitation (25, 26) et la partie (4) de l'enroulement d'excitation (4, 5) active en mode freinage, laquelle diode bloque lepassage du courant de la partie (4) de l'enroulement d'excitation (4, 5) active en mode freinage vers la faible impédance lorsque les moyens pour agir sur l'excitation du champ (25, 26) ont une faible impédance.

Fig. 1

Fig. 2

Fig. 3

EP 0 328 536 B1

Fig. 4

EP 0 328 536 B1

Fig. 5

EP 0 328 536 B1

Fig. 6

Fig.7